# EUROPEAN PATENT APPLICATION

(11) **EP 1 411 645 A1**
(43) Date of publication of application: **21.04.2004**
(21) Application number: 03023182.3
(22) Date of filing: 13.10.2003
(51) Int. Cl.: H04B 3/54, H04L 25/10

(54) **Balanced transmission apparatus**

(30) Priority: 17.10.2002 JP 2002302931
(71) Applicant: MATSUSHITA ELECTRIC INDUSTRIAL CO., LTD., Kadoma-shi, Osaka 571-8501 (JP)
(72) Inventor: Maki, Masahiro, Iizuka-Shi, Fukuoka-Ken, Iizuka 820-0002 (JP); Igata, Yuji, Fukuoka-Ken, Chikushino 818-0035 (JP); Kondou, Junji, Fukuoka-Ken, Tagawa-Gun 822-1101 (JP); Wakisaka, Toshiyuki, Iizuka-Shi, Fukuoka-Ken, Iizuka 820-0054 (JP); Gondo, Takao, Fukuoka-Ken, Chikushino 818-0071 (JP)
(74) Representative: Pautex Schneider, Nicole

(57) **Abstract**

In a transmitter, either the voltage or the current, or both applied to each of a pair of conductors (1) (2) is monitored. In a receiver either the voltage or the current, or both outputted from each conductor are monitored, thereafter the status will be outputted. Using the outputted status, either the voltage or the current, or both applied to the conductors (1) (2) in a transmitter will be controlled. This makes it possible to improve the degree of balance in the receiver while keeping the balance in the transmitter, which results in reducing EMC problems both in the transmitter and the receiver.

## Description

The present invention relates to a balanced transmission system and an art related thereto that sends data using one pair or a plurality of pairs of conductors.

As an example, there is a power line communication system that sends data by superimposing a high frequency signal on a pair of metallic cables used for electric power transmission.

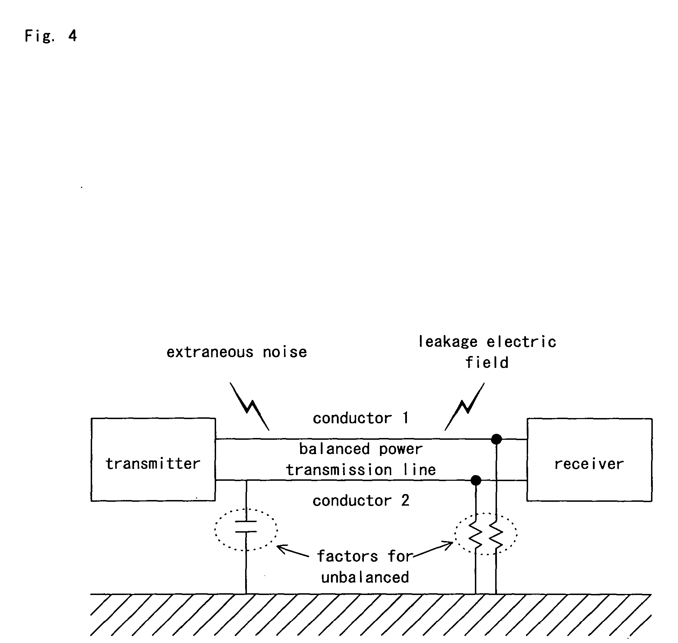

In such a case as sending data using one pair of metallic cables, EMC (Electromagnetic Compatibility) problems caused by the unbalance of a transmission line occur, as shown in Fig. 4.

These EMC problems include a leakage electric field induced by the metallic cables and extraneous noises coming into the metallic cables, both of which will deteriorate with increasing unbalance of the transmission line. These issues are described in detail in non-patent reference No.1 ("Problems and countermeasures for electromagnetic noises in telecommunication systems", Takeshi Ideguchi, et al., Morikita Shuppan, November 25, 1997, pp. 99 - 134).

In a balanced transmission system, complete balance is fundamentally required from a transmitting unit to a receiving unit. However, the complete balance is not realized due to the presence of unbalanced elements in transmitting and receiving circuit units or unbalance components on the transmission line.

Such unbalanced components in the transmission line may cause EMC problems, affecting other systems due to the leakage electric field or deteriorating performance of power line communication systems due to extraneous noises.

In view of the above, an object of the present invention is to provide an art of reducing the effect of EMC problems caused by the unbalance of the power transmission line.

In a first invention and a second invention, either or both of electric voltage or electric current applied to each of a pair of conductors are monitored and the electric power or the electric current to be applied is controlled according to the monitored values.

This structure makes it possible to keep the balance at a transmitting point without depending on the degree of balance of the transmission line, thus reducing EMC problems in a transmitter.

In a third invention, either or both of electric voltage or electric current outputted from each of a pair of conductors at a receiver are monitored and their status will be outputted.

With this structure, the balance status in the receiver may be evaluated.

In a fourth and a fifth inventions, in addition to the third invention described above, an output signal of a receiving condition output unit in the receiver is fed back to a transmitter, thereby either or both of electric voltage or electric current applied to each conductor will be controlled according to the fed-back output signal.

With this structure, the degree of balance in the receiving unit may be improved, thus serving to reduce EMC problems in the receiver.

From a sixth to an eighth invention, either or both of electric voltage or electric current applied to each of a pair of conductors is monitored in a transmitter, and either or both of electric voltage or electric current outputted from each of a pair of conductors at a receiver are monitored and their status will be outputted. Then either or both of electric voltage or electric current to be applied to each of a pair of conductors in the transmitter are controlled according to the monitored status.

With this structure, it may be possible to improve the degree of balance in the receiver while keeping the balance in the transmitter, thus serving to reduce EMC problems both in the transmitter and the receiver.

The above, and other objects, features and advantages of the present invention will become apparent from the following description read in conjunction with the accompanying drawings, in which like reference numerals designate the same elements.
Fig. 1 is a block diagram illustrating a transmitter of a balanced transmission apparatus according to a first embodiment of the present invention,
Fig. 2 is a block diagram illustrating a transmitter and a receiver of a balanced transmission apparatus according to a second embodiment of the present invention,
Fig. 3 is a block diagram illustrating a transmitter and a receiver of a balanced transmission apparatus according to a third embodiment of the present invention, and
Fig. 4 is a diagram illustrating effects of EMC problems in a prior art balanced transmission system.

Preferred embodiments of the present invention will be described in conjunction with the accompanying drawings.

### (Embodiment 1)

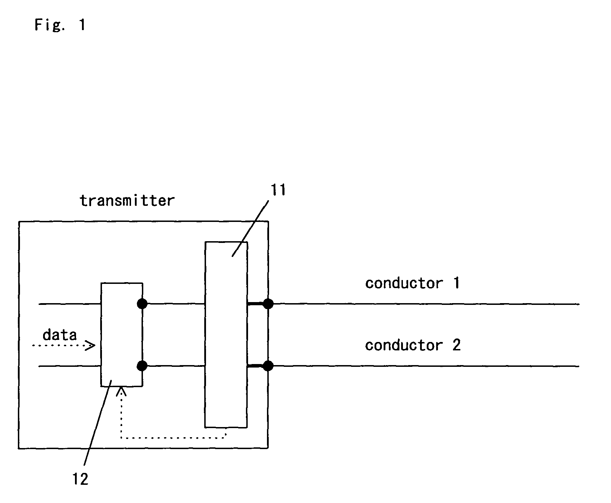

Fig. 1 is a block diagram illustrating a transmitter of a balanced transmission apparatus according to a first embodiment of the present invention.

As illustrated in Fig. 1, the transmitter according to the first embodiment of the present invention comprises a transmitting signal monitoring unit 11 and a transmitting signal control unit 12, wherein the balanced data to be sent is first inputted into the transmitting signal control unit 12, thereafter applied to a conductor 1 and a conductor 2 through the transmitting signal monitoring unit 11.

In this example, the degree of balance of the balanced data signal applied to the conductor 1 and the conductor 2 will be improved by using the apparatus in Fig. 1.

In Fig. 1, the balanced data inputted into the transmitting signal control unit 12 is a differential signal that is converted from an unbalanced signal into a balanced signal by such an unbalance-balance converter as represented by an unbalance-balance converting transformer called a balun or a differential driver circuit, etc. Although this differential signal is assumed to be balanced perfectly, there is no problem in practice if the balance is not kept perfectly.

In the transmitting signal control unit 12, either a voltage value or a current value, or both values will be changed to output so that the degree of balance for the inputted differential signal may be improved.

The differential signal outputted from this transmitting signal control unit 12 will be applied to the conductor 1 and the conductor 2 through the transmitting signal monitoring unit 11. At this time, the signal applied to the conductors may have a different value from the value outputted from the transmitting signal control unit 12, according to the transmitting impedance of the transmitter and the transmitting line impedance (impedance of the conductors and of all the elements connected to the conductors). In this case, the degree of balance may deteriorate, although the transmitting signal control unit 12 has made adjustment in order to improve the degree of balance.

Thereby, either the voltage value or the current value, or both values actually applied to the conductors are monitored by the transmitting signal monitoring unit 11 and the signal level actually applied to the conductors are fed back to the transmitting signal control unit 12 (a broken line in Fig. 1). Using this feedback signal, the transmitting signal control unit 12 controls either the voltage or the current, or both so that the degree of balance of the signal actually applied to the conductors may be improved.

Consequently, the transmitting signal level to be actually applied to the conductors will be controlled according to the transmission line status. As a result, the degree of balance will be improved.

In the above example, controlling the transmitting signal level with a regular feedback has been described. Determining the transmitting signal level with one feedback at first is also effective.

### (Embodiment 2)

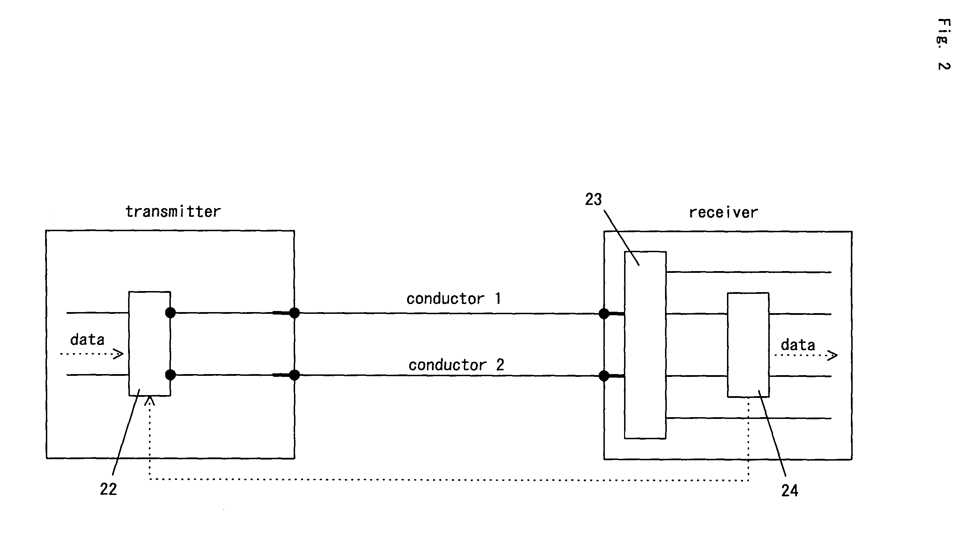

Fig. 2 is a block diagram illustrating a transmitter and a receiver of a balanced transmission apparatus according to a second embodiment of the present invention.

As illustrated in Fig. 2, the receiver according to the second embodiment of the present invention comprises a receiving signal monitoring unit 23 and a receiving status output unit 24. The transmitter includes a transmitting signal control 22, wherein balanced data to be sent is first inputted into a transmitting signal control unit, thereafter applied to a conductor 1 and a conductor 2.

In this example, the degree of balance of a balanced data signal from the conductor 1 and the conductor 2 in a receiver will be improved by using the apparatus in Fig. 2.

In the receiver, a received signal from the conductor 1 and the conductor 2 connected to the receiver will be received through the receiving signal monitoring unit 23. The receiving signal monitoring unit 23 has a function to detect either the voltage value or the current value, or both values of the received signal, and to output the detected result to the receiving status output unit 24.

In the balanced transmission system according to the present embodiment, a signal sent through the conductor 1 and the conductor 2 as medium is a differential signal; therefore, the sum of the signal outputted from each conductor makes a fixed bias value. Fundamentally, this bias value is one applied in a transmitter, and can be specified. If the sum of the signal monitored in the receiving signal monitoring unit 23 is found to be different from the bias value applied in the transmitter, it means that a common mode signal is applied by some reasons. Generally, this is due to the unbalance of the transmission line. Accordingly, the receiver according to the present embodiment comprising the receiving signal monitoring unit 23 may evaluate the balance of the transmission line.

Furthermore, Fig. 2 also illustrates an example including a function to feedback the detected result by the receiving signal monitoring unit 23 into the transmitter through the receiving status output unit 24. At this time, the feedback signal is transferred to the transmitting signal control unit 22 in the transmitter, which makes it possible to control the transmitting signal according to the balance evaluated at the receiving signal monitoring unit 23. For example, if a value that is different from the bias value applied in the transmitter is detected in the receiving signal monitoring unit 23, the detected value is transferred to the transmitting signal control unit 22 in the transmitter. Then, the transmitting signal control unit 22 controls so as to decrease the difference between the bias value and the detection value detected by the receiving signal monitoring unit 23. As a result, the degree of balance in the receiver may be improved.

### (Embodiment 3)

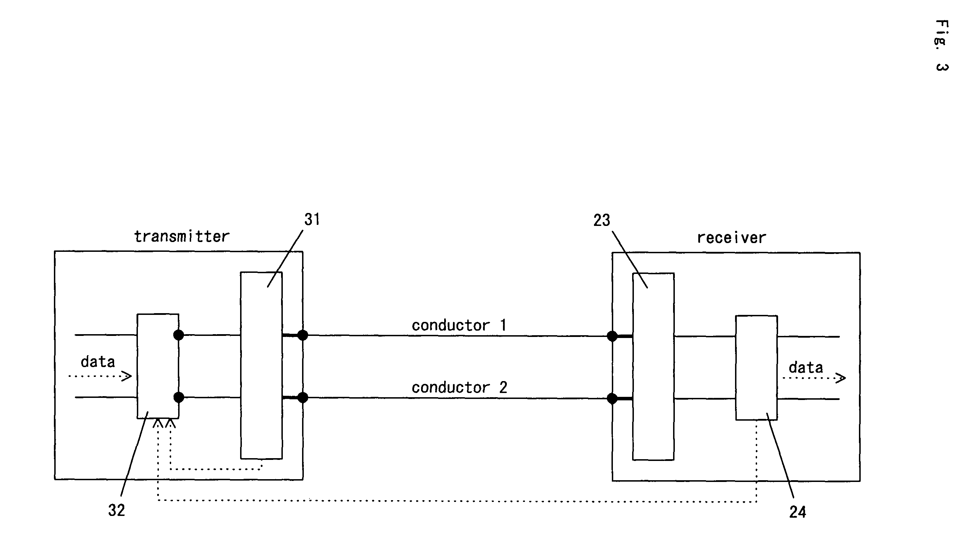

Fig. 3 is a block diagram illustrating a transmitter and a receiver of a balanced transmission apparatus according to a third embodiment of the present invention.

As shown in Fig. 3, in the balanced transmission apparatus in accordance with the third embodiment, balanced data is sent by the transmitter which comprises a transmitting signal monitoring unit 31 and a transmitting signal control unit 32, and received by the receiver which comprises a receiving signal monitoring unit 33 and a receiving state output unit 34. The balanced data to be sent is first inputted into the transmitting signal control unit 32, thereafter applied to a conductor 1 and a conductor 2 through the transmitting signal monitoring unit 31. The signal sent through the conductor 1 and the conductor 2 as medium is received by the receiving signal monitoring unit 33. The receiving signal monitoring unit 33 has a function to output either the voltage value or the current value, or both values of the received signal, which will be outputted from the receiving state output unit 34.

In this example, the degree of balance of the balanced data signal applied to the conductor 1 and the conductor 2 will be improved by using the apparatus in Fig. 3.

In Fig. 3, balanced data to be sent is first inputted into the transmitting signal control unit 32, thereafter applied to the conductor 1 and the conductor 2 through the transmitting signal monitoring unit 31. The operation of the transmitter according to the present embodiment is the same as in the first embodiment. The signal level to be actually applied to the conductors is monitored by the transmitting signal monitoring unit 31, and according to the signal level, the signal output of the transmitting signal control unit 32 is controlled. This feature is effective to improve the degree of balance in the transmitter, as in the first embodiment.

Next, the operation of the receiver will be described. A signal transmitted through the conductor 1 and the conductor 2 as medium is received through the receiving signal monitoring unit 33. The receiving signal monitoring unit 33 has a function to output either the voltage value or the current value, or both values of the received signal, and the value will be outputted from the receiving state output unit 34. The operation is the same as in the second embodiment, wherein the signal output is controlled by the transmitting signal control unit 32 of the transmitter so that a common mode signal level detected by the receiving signal monitoring unit 33 may become small. This feature is effective to improve the degree of balance in the receiver as in the second embodiment.

The two kinds of operations mentioned above may improve the degree of balance both in the transmitter and the receiver.

The transmitting signal control unit 32 receives two feedback signals, the signal from the transmitting signal monitoring unit 31 and the signal from the receiving state output unit 34. Therefore, the degree of balance of a transmitter is controlled to improve, for example, the degree of balance of the receiver may deteriorate. In this case, threshold values are provided with the signal from the transmitting signal monitoring unit 31 and the signal from the receiving state output unit 34. The threshold values may be decided by the allowance for the degree of balance of the transmitter or the degree of balance of the receiver. Each allowance for the degree of balance may be decided by the allowance for a leakage electric field level. For example, when controlling the transmitting output in the transmitting signal control unit 32 according to the signal of the transmitting signal monitoring unit 31, the sum of the signal levels applied to the conductor 1 and the conductor 2 is assumed to be the same as the bias value. This means that the degree of balance is high enough in the transmitter. However, in this case, the sum of the signal levels of the conductor 1 and the conductor 2 may be different from the bias value in the receiver. When different, whether the difference exceeds the threshold value or not will be checked. When not exceeding the threshold value, the leakage electric field of the whole system is judged to be small. When exceeding the threshold value, transmitting output will be controlled by the transmitting signal control unit 32 in order to make the difference approach the threshold. As a result, although the degree of balance in the transmitter deteriorates, the degree of balance in the receiver improves. Thus making both differences approach the corresponding threshold values improves the degree of balance of the whole system, which may result in reducing leakage electric fields.

In the above explanation, the configuration of the system is assumed to comprise one transmitter and one receiver. The same effect will be acquired for a system comprising a plurality of transmitters and receivers.

In conclusion, the present invention makes it possible to keep the balance at a transmitting point without depending on the degree of balance of a transmission line, which results in reducing EMC problems in a transmitter.

The present invention also makes it possible to improve the degree of balance in a receiving point, while evaluating the balance in a receiver, which results in reducing EMC problems in the receiver.

Combining the two features mentioned above enables the degree of balance to be improved both in the transmitter and the receiver, which results in reducing EMC problems in the whole balanced transmission system.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A transmitter for transmitting data using at least one pair of conductors (1) (2), the transmitter comprising:
a transmitting signal monitoring unit (11) operable to monitor at least one of electric voltages and electric currents applied to the pair of the conductors (1) (2); and
a transmitting signal control unit (12) operable to control at least one of the electric voltages and the electric currents applied to the pair of conductors (1) (2) according to signals outputted by said transmitting signal monitoring unit (11).

2. A transmitter as recited in claim 1, wherein said transmitting signal control unit (12) controls at least one of the electric voltages and the electric currents applied to each of the conductors (1) (2) such that at least one of a difference between the electric voltages applied to the pair of conductors (1) (2) and a difference between the electric currents applied to the pair of conductors (1) (2) is reduced.

3. A receiver for receiving data using at least one pair of conductors (1) (2), the receiver comprising:
a receiving signal monitoring unit (23) operable to monitor at least one of electric voltages and electric currents applied to the pair of the conductors (1) (2); and
a receiving status output unit (24) operable to output data monitored by said receiving signal monitoring unit (23).

4. A transmitter for transmitting data to a receiver that receives data using at least one pair of conductors (1) (2), the receiver comprising: a receiving signal monitoring unit (23) operable to monitor at least one of electric voltages and electric currents applied to the pair of the conductors (1) (2); and a receiving status output unit (24) operable to output data monitored by the receiving signal monitoring unit (23),
the transmitter comprising: a transmitting signal control unit (22) operable to control at least one of the electric voltages and the electric currents applied to the pair of conductors (1) (2), according to fed-back signals outputted by the receiving status output unit (24) of the receiver.

5. A transmitter as recited in claim 4, wherein said transmitting signal control unit (22) controls according to the fed-back signals at least one of the electric voltages and the electric currents such that at least one of a difference of electric voltages and a difference of electric currents outputted from a pair of conductors connected to the receiver is reduced.

6. A balanced transmission apparatus using at least one pair of conductors (1) (2), the balanced transmission apparatus comprising: a receiver and a transmitter,
the receiver comprising:
a receiving signal monitoring unit (23) operable to monitor at least one of electric voltages and electric currents applied to the pair of the conductors (1) (2); and
a receiving status output unit (24) operable to output data monitored by said receiving signal monitoring unit (23),
the transmitter comprising:
a transmitting signal monitoring unit (22) operable to monitor at least one of electric voltages and electric currents applied to the pair of the conductors (1) (2); and
a transmitting signal control unit (23) operable to control at least one of the electric voltages and the electric currents applied to the pair of conductors (1) (2) according to both signals outputted by said transmitting signal monitor unit (22) and fed-back signals outputted by said receiving status output unit (24) of the receiver.

7. A balanced transmission apparatus as recited in claim 6, wherein said transmitting signal control unit (23) controls at least one of the electric voltages and the electric currents applied to the pair of the conductors (1) (2) such that at least one of a difference between the electric voltages applied to the pair of conductors (1) (2) and a difference between the electric currents applied to the pair of conductors (1) (2) is reduced, and wherein said transmitting signal control unit (23) controls according to the fed-back signals at least one of the electric voltages and the electric currents such that at least one of a difference of electric voltages and a difference of electric currents outputted from the pair of conductors (1) (2) connected to the receiver is reduced.

8. A balanced transmission apparatus as recited in claim 6, wherein said transmitting signal control unit (23) controls at least one of the electric voltages and the electric currents applied to the pair of the conductors (1) (2) such that at least one of a difference between the electric voltages applied to the pair of conductors (1) (2) and a difference between the electric currents applied to the pair of conductors (1) (2) is less than a predetermined threshold, and
wherein said transmitting signal control unit (23) controls according to the fed-back signals at least one of the electric voltages and the electric currents such that at least one of a difference of electric voltages and a difference of electric currents outputted from a pair of conductors connected to the receiver is less than a predetermined threshold.

9. A transmitter for transmitting data using at least one pair of conductors (1) (2), the transmitter comprising,
a unit operable to apply the pair of conductors (1) (2) at least one of electric voltages and electric currents,
wherein at least one of electric voltages and electric currents applied to one of the pair of the conductors (1) (2) is different from at least one of electric voltages and electric currents applied to another of the pair of the conductors (1) (2).
